# FASCICULE DE BREVET EUROPEEN

(11) **EP 0 804 966 B1**
(45) Date de publication et mention de la délivrance du brevet: **17.07.2002**
(21) Numéro de dépôt: 97400952.4
(22) Date de dépôt: 28.04.1997
(51) Int. Cl.: B03C 3/74

(54) **Filtre électrostatique à procédé de décolmatage rapide sans rupture de confinement**
Elektrofilter mit schnelles Reinigungsprozess ohne Bruch der Umschliessung
Electrostatic filter with fast cleaning process without loss of confinement

(30) Priorité: 30.04.1996 FR 9605417
(43) Date de publication de la demande: 05.11.1997
(73) Titulaire: COMMISSARIAT A L'ENERGIE ATOMIQUE, 75015 Paris (FR)
(72) Inventeur: Granjean, Jean-Paul, 30200 Sabran (FR); Bernard, Jean-Raymond, 37330 Courcelles de Touraine (FR); Pilot, Guy, 78114 Magny-Les-Hameaux (FR)
(74) Mandataire: Ilgart, Jean-Christophe

(56) Documents cités:
- DE-A- 2 701 498
- DE-C- 315 534
- FR-A- 609 987
- FR-A- 2 638 659
- SU-A- 1 002 010

## Description

L'invention concerne un filtre électrostatique à procédé de décolmatage rapide sans rupture de confinement.

Les filtres électrostatiques sont constitués d'éléments conducteurs de l'électricité portés à des tensions différentes au moyen d'un générateur de tension continue. Des charges électrostatiques puissantes sont créées entre ces éléments, qu'un courant de gaz empoussiéré traverse : les particules composant ces poussières, ionisées naturellement ou après une opération préalable, sont attirées par les éléments conducteurs et se déposent sur eux. Les filtres électrostatiques se sont révélés très utiles pour purifier les gaz fortement chargés en impuretés tels que les gaz de combustion ; on les emploie souvent en amont de filtres à plus haute efficacité qui retiennent les particules les plus fines mais seraient trop rapidement encrassés si les gaz arrivaient directement sur eux.

L'encrassement des filtres électrostatique est pourtant inéluctable lui aussi malgré les intervalles relativement grands entre les éléments conducteurs, ce qui impose de prévoir des procédés de décolmatage.

On utilise le plus souvent des brosses ou des raclettes qu'on fait passer le long des éléments conducteurs, mais cela impose de compliquer sensiblement le filtre. On a encore pensé à décoller les impuretés accumulées par des vibrations, en produisant des secousses ou des chocs sur la paroi ou les éléments conducteurs, mais une grande énergie doit être dépensée et il n'est pas toujours facile de déterminer les conditions les meilleures pour que les vibrations s'accompagnent effectivement d'un décolmatage, d'autant plus que les vibrations mécaniques peuvent endommager le filtre.

Dans le brevet FR-A-609 987, le décolmatage est accompli par des ondes acoustiques mettant en vibration les électrodes du filtre pour en détacher la poussière.

Dans le brevet DE-C-315 534, qui mentionne un dispositif analogue, le générateur d'ondes acoustiques peut être placé dans une chambre voisine de celle du filtre.

Dans le brevet FR-A-2 638 659, on dispose des transducteurs ultrasonores à travers des ouvertures de l'enveloppe du filtre. Ces transducteurs sont terminés par une masse métallique rigide faisant office d'émetteur des ultrasons. Cette conception ne peut donner satisfaction qu'en milieu aqueux et ne se prête donc pas au dépoussiérage des gaz.

On doit aussi citer le certificat d'auteur SU-A-927 317, où le décolmatage est assuré par des ondes acoustiques à la fréquence de résonance des électrodes.

Un nouveau procédé est proposé avec l'invention :
il consiste à mettre en vibration le volume gazeux contenu dans l'enveloppe du filtre plutôt que les éléments solides du filtre lui-même, grâce à un générateur d'ondes sonores placées derrière une partie en membrane flexible qui fait partie de l'enveloppe du filtre et isole le générateur du contenu de l'enveloppe tout en transmettant bien les ondes sonores produites. Aucune rupture du confinement offert par l'enveloppe du filtre n'est donc produite pendant le décolmatage.

L'invention est définie avant tout par la revendication 1. Le générateur d'ondes sonores est réglé pour produire des vibrations acoustiques à une fréquence de coïncidence de la membrane afin de produire les vibrations voulues dans le filtre, mais aucune limite n'est fixée, si bien que l'invention peut recouvrir des fréquences ultrasonores ou infrasonores si cela est nécessaire ; en pratique, on a constaté qu'un générateur de basses fréquences donnait de bons résultats. Ainsi par exemple, des pulsations d'un dixième de seconde ou de quelques dixièmes de seconde au rythme d'une toute les deux secondes ont permis d'obtenir un décolmatage complet au bout d'une dizaine de secondes.

Il résulte de cette rapidité de décolmatage que l'interruption du fonctionnement du filtre (si même elle est nécessaire) ne dure qu'une faible proportion de son temps de service, contrairement aux procédés où on emploie des brosses et raclettes et qui imposent une interruption assez longue et souvent impossible à éviter, puisque les raclettes produisent une obstruction du filtre qui peut être totale dans certaines réalisations. Le bénéfice obtenu est surtout sensible quand la circulation des gaz empoussiérés doit être permanente, par exemple quand elle est produite par une combustion continue : dans les installations existantes où le décolmatage impose l'arrêt de la filtration, il faut disposer d'un second filtre électrostatique disposé en parallèle au premier et par lequel on fait passer le courant de gaz quand le premier filtre est en cours de décolmatage. Ce second filtre devient inutile avec l'invention, car si l'interruption est brève il est possible de diriger simplement les gaz empoussiérés vers le filtre à haute efficacité disposé en aval du filtre électrostatique en leur faisant contourner le filtre électrostatique par une dérivation : l'encrassement supplémentaire supporté par le filtre à haute efficacité reste très modéré.

On va maintenant décrire l'invention plus en détail à l'aide des figures suivantes, annexées à titre illustratif et non limitatif :
- la figure 1 est une vue générale de l'invention et d'une installation de filtration de gaz,
- la figure 2 est une vue d'une autre installation,
- la figure 3 est une vue de cette autre installation dans un second état,
- et la figure 4 est une vue d'une troisième installation possible.

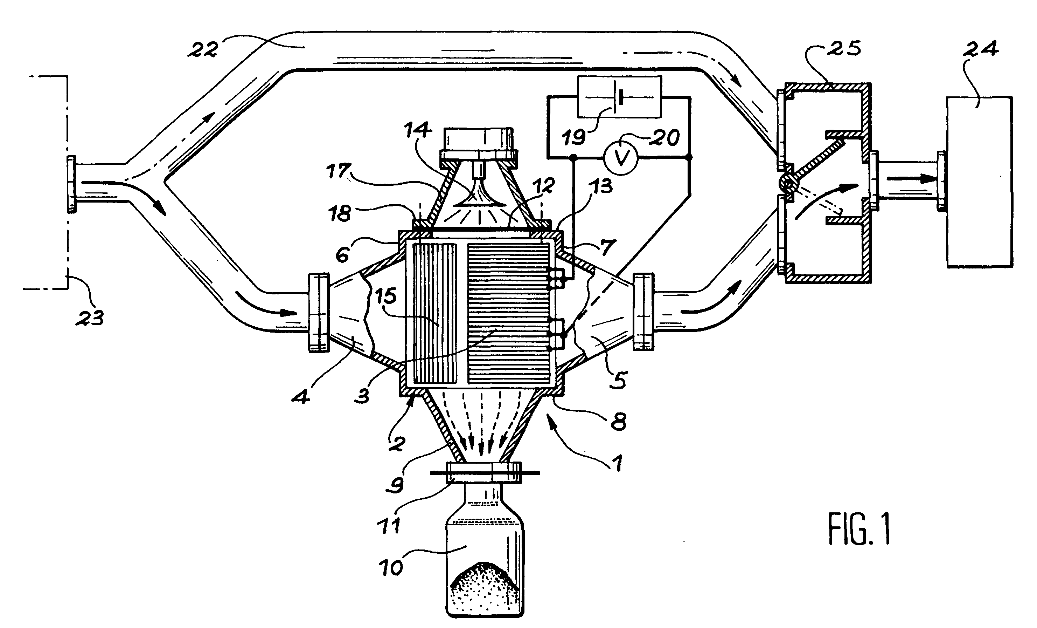

Le filtre électrostatique 1 représenté à la figure 1 a une forme sensiblement cubique et comprend une enveloppe 2 externe emplie d'éléments filtrants 3 qui peuvent prendre la forme de plaques parallèles et orientées dans le sens de la circulation d'un courant de gaz fourni par un tuyau d'arrivée 4 et sortant par un tuyau de sortie 5 qui débouchent dans le filtre 1 en traversant deux faces latérales et opposées 6 et 7 de son enveloppe 2. Les éléments filtrants 3 sont précédés par une cartouche d'ionisation 15 aussi traversée par les gaz et où les particules qu'ils charrient acquièrent une charge électrique. Le fond 8 de l'enveloppe 2 est percé et se termine par un entonnoir au bout duquel peut être accolée l'ouverture d'une poubelle 10 qui reçoit des poussières accumulées sur les éléments filtrants 3 et éventuellement sur les éléments de la cartouche d'ionisation 15 quand le décolmatage est entrepris ; un système de connexion à double porte 11, couramment employé dans l'industrie nucléaire et composé de deux brides chacune fixées à l'ouverture d'un récipient, qu'on peut unir et séparer à volonté et qui sont munies de portes respectives qui s'accouplent quand les brides sont unies, de façon à s'ouvrir et se fermer simultanément, est si nécessaire disposé entre l'entonnoir 9 et la poubelle 10. Tous ces éléments sont déjà connus et ne méritent donc pas de description supplémentaire.

L'élément essentiel de l'invention est prévu au sommet du filtre 1 et consiste en une membrane 12 qui occupe une partie de la face de sommet 13 de l'enveloppe 2 et derrière laquelle on a disposé un générateur d'ondes acoustiques 14. Plus concrètement, la membrane 12 peut avoir son pourtour enserré entre deux bandes circulaires de tôle dont la bande inférieure appartient à la face supérieure 13 de l'enveloppe 2 et la bande supérieure est une bride 18 de fixation d'une trompe 17, dans laquelle le générateur d'ondes acoustiques 14 est enfermé, à la face supérieure 13.

On voit que la mise en route du générateur d'ondes sonores 14 emplit de vibrations le contenu de la trompe 17 et avant tout fait vibrer l'air situé sous la membrane 12 qui est formée d'une mince feuille de matière plastique ou métallique ou d'une matière présentant des propriétés acoustiques analogues qui permettent de transmettre les vibrations à l'intérieur de l'enveloppe 2. Les vibrations du volume gazeux avoisinant les éléments filtrants 3 détachent la poussière accumulée sur eux et la font choir dans la poubelle 10. On choisit évidemment les ondes sonores les plus aptes à produire ce résultat ; selon l'invention elles coïncident avec une fréquence de coïncidence de la membrane 12 pour la faire entrer dans un mode rayonnant ; dans des essais réels, on a constaté qu'un décolmatage complet était obtenu en appliquant des pulsations de quelques dixièmes de seconde pendant dix secondes au total.

Les fréquences de coïncidence correspondent à un maximum de transmission de l'onde acoustique incidente, en aval de la membrane. Les nombres d'ondes dans l'air et dans la plaque ou membrane coïncident et le maximum d'énergie est transmis.

Le maximum de rayonnement (donc d'énergie transmise) d'une membrane ou d'une plaque ne se produit pas nécessairement aux fréquence de résonance : il faut, pour avoir une transmission optimale, que la fréquence soit supérieure à une fréquence critique pour obtenir le rayonnement.

Dans le cadre de nos essais, nous avons encore utilisé avec succès une membrane en plastique (PVC) très peu tendue d'épaisseur 0,5 mm : on peut donc imaginer que cette membrane vibre très peu. Cette constatation prouve bien qu'il s'agit de transmission ou de transparence aux ondes acoustique, et non pas de résonance.

Lorsque nous avons essayé des membranes métalliques, c'est avec une membrane d'épaisseur 0,1 mm en acier inoxydable que nous avons obtenu les meilleurs résultats : en effet, nous avons obtenu une bonne transmission de l'onde acoustique et donc un bon décolmatage du filtre. Cet essai nous a permis d'envisager l'utilisation des membranes métalliques qui ont l'avantage d'être solides et décontaminables.

Les fréquences principalement émises par le générateur d'ondes sonores étaient des multiples de 220 Hz, les trois premiers et le cinquième harmoniques étant les plus énergétiques (220, 440, 660 et 1100 Hz environ).

Il semble que les fréquences principalement transmises par la membrane métallique d'épaisseur 0,1 mm étaient supérieures ou égales à 660 Hz ; notamment nous observâmes deux pics, respectivement centrés sur 660 et 1100 Hz lorsque nous mesurâmes le spectre réémis par la membrane dans le filtre. Ceci laisse supposer que la fréquence critique de la membrane est inférieure à 660 Hz, mais nous n'avons pas vérifié cette donnée de façon analytique. Nous n'avons pas non plus calculé ses fréquences de résonance, car elles nous sont inutiles pour nos essais.

La brièveté du décolmatage permet de ne pas interrompre la circulation des gaz empoussiérés même si on préfère de ne pas les faire passer par le filtre électrostatique 1 : on peut prévoir alors de disposer une dérivation 22 parallèle aux conduits 4 et 5, entre une installation d'origine des gaz 23 telle qu'une chambre de combustion, et un filtre à très haute efficacité 24 après lequel les gaz entièrement dépouillés des particules qu'ils charriaient, sont rejetés dans l'atmosphère ou, s'ils sont dangereux, vers des installations de neutralisation chimique, de craquage des molécules, etc. selon le cas. Une vanne de commutation 25 est disposée au confluent du conduit de sortie 5 et de la dérivation 22 : elle bouche en temps normal la dérivation 22 et laisse les gaz originaires de la chambre de combustion 23 passer par les conduits 4 et 5 et le filtre électrostatique 1 ; mais on a représenté la situation inverse, réalisée pendant le décolmatage et pour laquelle les gaz empoussiérés passent par la dérivation 22, le conduit de sortie 5 étant bouché.

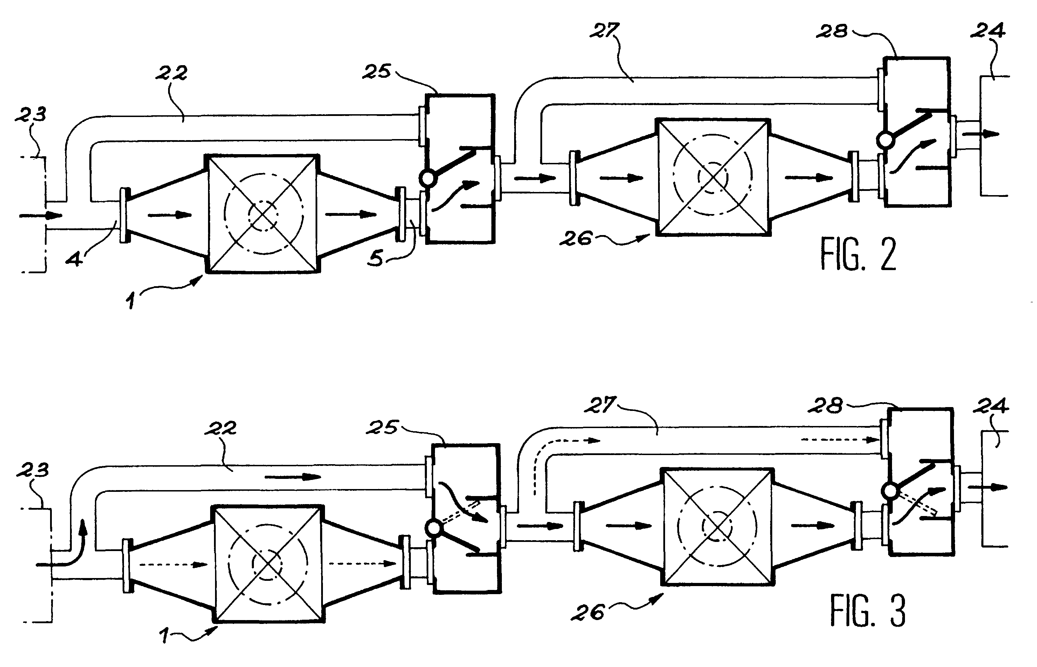

Tout le dépoussiérage repose alors sur le filtre à très haute efficacité 24, qui subit un encrassement beaucoup plus rapide mais de courte durée. Si on juge cependant que ce supplément d'encrassement du filtre à très haute efficacité 24 est excessif, on peut préférer l'installation représenté à la figure 2, où un deuxième filtre électrostatique 26 est disposé en série avec le précédent 1, entre la chambre de combustion 23 et le filtre à très haute efficacité 24 ; une dérivation 22 et une vanne de commutation 25 sont adjointes au filtre électrostatique 1 comme à la figure 1, et le second filtre électrostatique 26 est également pourvu d'une dérivation 27 d'une vanne de commutation 28 disposées de la même façon. Pendant le fonctionnement normal, le courant de gaz passe successivement par les deux filtres électrostatiques 1 et 26, mais quand l'un d'eux doit être décolmaté (tel que le filtre 1, conformément à la figure 3), on agit sur sa vanne de commutation pour faire passer les gaz par la dérivation qui le contourne, et le dépoussiérage est pris en charge uniquement par l'autre des filtres électrostatiques. Le filtre à très haute efficacité 24 reçoit donc toujours des gaz partiellement purifiés.

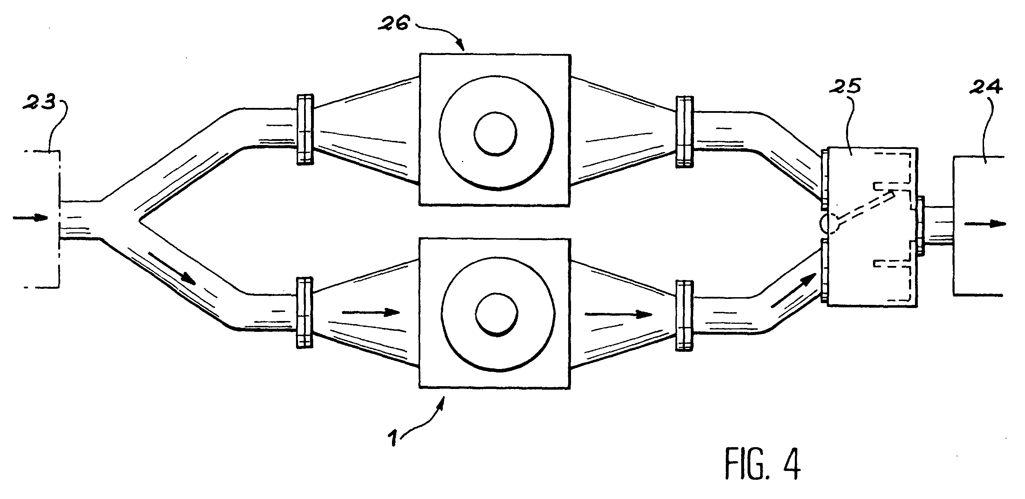

Enfin, on peut choisir une disposition où les filtres électrostatiques 1 et 26 sont disposés en parallèle, comme cela est représenté à la figure 4 : le second filtre électrostatique 26 prend en fait la place de la dérivation 22 de la figure 2 ; la vanne de commutation 25 permet de faire passer à volonté le courant de gaz par un des filtres électrostatiques 26, et l'autre reste au repos, ce qui permet de le décolmater si on le souhaite ; on peut éventuellement remplacer la vanne de commutation 25 par une autre vanne qui autorise l'ouverture simultanée des deux branches du circuit pendant le service normal.

Il est parfois difficile de prévoir le bon moment pour décolmater car l'encrassement d'un filtre électrostatique ne s'accompagne pas d'un bouchage, de sorte que les gaz continuent de la traverser normalement même quand l'efficacité de dépoussiérage a diminué. Selon l'invention, on peut déterminer ce moment de façon assez sûre grâce au générateur de tension continue 19 (en revenant à la figure 1) du filtre 1, qui est branché entre deux groupes d'éléments filtrants 3 pour leur imposer les différences de potentiel qui produisent le champ électrique : les inventeurs ont en effet constaté que la tension délivrée par le générateur de tension continue 19 baissait avec l'encrassement des éléments filtrants 3. Ils conseillent donc de procéder au décolmatage dès qu'un seuil de tension est atteint en procédant à une mesure continue de la tension aux bornes du générateur 19 par un voltmètre 20 ou un instrument équivalent : le décolmatage peut ainsi être commandé si la tension délivrée passe au-dessous de 115 volts alors qu'elle est dans les conditions opératoires du dispositif utilisé de 130 volts quand le filtre est propre. Ce critère se prête bien à un procédé de décolmatage automatique.

On notera enfin que la membrane flexible 12 permet de laisser le générateur d'ondes acoustiques 14 à l'extérieur du filtre, ce qui a pour effet d'éviter que le courant d'air qui l'alimente ne crée des turbulences dans le filtre 1, qui seraient susceptibles de détacher des poussières et de les entraîner vers le filtre à très haute efficacité 24.

## Revendications

1. Agencement à filtre électrostatique, comprenant un filtre électrostatique (1), une enveloppe (2) entourant le filtre électrostatique (1), et un générateur d'ondes sonores (14) constituant un moyen de décolmatage du filtre (1), **caractérisé en ce que** l'enveloppe (2) comprend une partie constituée par une membrane flexible (12), et **en ce que** le générateur d'ondes sonores (14) est destiné à émettre des ondes sonores à une fréquence de coïncidence de la membrane, pour laquelle la membrane flexible (12) transmet un maximum de l'onde sonore produite par le générateur, la membrane flexible (12) séparant le générateur d'ondes sonores (14) du filtre électrostatique (1).

2. Agencement à filtre selon la revendication 1, **caractérisé en ce que** la membrane (12) est située à une face supérieure (13) de l'enveloppe, une poubelle (10) est située sous le filtre (1) et communique avec le filtre par un conduit de collecte (9), et des conduits d'arrivée (4) et de sortie (5) de gaz à filtrer débouchent dans le filtre par deux parties opposées (6, 7) de l'enveloppe (2).

3. Agencement à filtre selon l'une quelconque des revendications 1 ou 2, **caractérisé en ce que** les ondes sonores consistent en des pulsations durant au moins un dixième de seconde.

4. Agencement à filtre selon l'une quelconque des revendications 1 à 3, **caractérisé en ce que** la membrane est constituée d'une matière en plastique ou métallique.

5. Procédé de décolmatage d'un filtre électrostatique dans un agencement selon l'une quelconque des revendications 1 à 4, **caractérisé en ce que** le générateur d'ondes sonores est mis en marche à une fréquence de coïncidence de la membrane flexible (12) pendant que le gaz est maintenu en circulation à travers une dérivation formée d'une branche de circulation des gaz qui contourne le filtre électrostatique (1), en faisant vibrer un volume gazeux environnant le filtre pour détacher de la poussière déposée sur le filtre.

6. Procédé de décolmatage selon la revendication 5, **caractérisé en ce que** le gaz mis en dérivation autour du filtre électrostatique pendant que ledit filtre est décolmaté est dirigé directement vers un second filtre (24), situé en aval du filtre électrostatique.

7. Procédé de décolmatage selon l'une quelconque des revendications 5 ou 6, **caractérisé en ce que** le décolmatage est entrepris dès qu'une tension, maintenue entre des éléments conducteurs (3) du filtre (1) par un générateur de tension (19), passe sous un seuil déterminé.

8. Procédé de décolmatage selon l'une quelconque des revendications 5 à 7, **caractérisé en ce qu'**il est accompli sans rupture de confinement du filtre.

## Patentansprüche

1. Vorrichtung mit elektrostatischem Filter, einen elektrostatischen Filter (1), eine den elektrostatischen Filter (1) umgebende Umhüllung (2) und einen Schallwellengenerator (14) umfassend, der eine Reinigungseinrichtung des Filters (1) bildet,
**dadurch gekennzeichnet,**
**dass** die Umhüllung (2) einen Teil umfasst, der durch eine flexible Membran (12) gebildet wird, und dass der Schallwellengenerator (14) dazu bestimmt ist, Schallwellen mit einer Frequenz auszusenden, die mit derjenigen übereinstimmt, bei der die flexible Membran (12) ein Maximum der durch den Generator erzeugten Schallwelle überträgt, wobei die flexible Membran (12) den Schallwellengenerator (14) von dem elektrostatischen Filter (1) trennt.

2. Filtervorrichtung nach Anspruch 1, **dadurch gekennzeichnet, dass** die Membran (12) sich auf einer Oberseite (13) der Umhüllung befindet, ein Abfallbehälter (10) unter dem Filter (10) angeordnet ist und mit dem Filter durch eine Sammelleitung (9) kommuniziert, und Eingangs- und Ausgangsleitungen (4) und (5) des zu filternden Gases an zwei entgegengesetzten Seiten (6, 7) der Umhüllung (2) münden.

3. Filtervorrichtung nach einem der Ansprüche 1 oder 2, **dadurch gekennzeichnet, dass** die Schallwellen aus Impulsen bestehen, die wenigstens eine Zehntelsekunde dauern.

4. Filtervorrichtung nach einem der Ansprüche 1 bis 3, **dadurch gekennzeichnet, dass** die Membran aus Kunststoff oder aus Metall ist.

5. Verfahren zur Reinigung eines elektrostatischen Filters in einer Vorrichtung nach einem der Ansprüche 1 bis 4,
**dadurch gekennzeichnet, dass** der Schallwellengenerator mit einer Frequenz betrieben wird, die mit derjenigen der flexiblen Membran (12) übereinstimmt, während der Gasstrom durch eine Umleitung aufrechterhalten wird, gebildet durch einen Zirkulationszweig der Gase, der den elektrostatischen Filter (1) umgeht, wobei ein den Filter umgebendes Gasvolumen zur Vibration gebracht wird, um Staub abzulösen, der sich auf dem Filter niedergeschlagen hat.

6. Reinigungsverfahren nach Anspruch 5, **dadurch gekennzeichnet, dass** das Gas, das während der Reinigung des elektrostatischen Filters um diesen Filter herum umgeleitet wird, direkt zu einem zweiten Filter (24) geleitet wird, der dem elektrostatischen Filter nachgeschaltet ist.

7. Reinigungsverfahren nach einem der Ansprüche 5 oder 6, **dadurch gekennzeichnet, dass** die Reinigung durchgeführt wird, sobald eine Spannung, die zwischen leitenden Elementen (3) des Filters (1) durch einen Spannungserzeuger (19) aufrechterhalten wird, einen bestimmten Schwellenwert unterschreitet.

8. Reinigungsverfahren nach einem der Ansprüche 5 bis 7, **dadurch gekennzeichnet, dass** es ohne Bruch bzw. Öffnung der Umschließung des Filters durchgeführt wird.

## Claims

1. Electrostatic filter arrangement comprising an electrostatic filter (1), an envelope (2) surrounding the electrostatic filter (1) and a sound wave generator (14) constituting a cleaning means for the filter (1), **characterized in that** the envelope (2) comprises a portion constituted by a flexible membrane (12) and **in that** the sound wave generator (14) is intended to emit sound waves at a membrane coincidence frequency for which the flexible membrane (12) transmits a maximum of the sound wave produced by the generator, the flexible membrane (12) separating the sound wave generator (14) from the electrostatic filter (1).

2. Filter arrangement according to claim 1, **characterized in that** the membrane (2) is located at an upper face (13) of the envelope, a bin (10) being placed beneath the filter (1) and communicates with the filter by a collection duct (9), and inlet duct (4) and outlet duct (5) for the gases to be filtered issue into the filter by two opposite portions (6, 7) of the envelope (2).

3. Filter arrangement according to either of the claims 1 and 2, **characterized in that** the sound waves consist of pulses lasting at least 1/10 second.

4. Filter arrangement according to any one of the claims 1 to 3, **characterized in that** the membrane is made from a plastic or metallic material.

5. Process for cleaning an electrostatic filter in an arrangement according to any one of the claims 1 to 4, **characterized in that** the sound wave generator is started up at a flexible membrane (12) coincidence frequency whilst the gas is kept circulating through a bypass formed by a gas circulation branch passing round the electrostatic filter (1), whilst making the gaseous volume around the filter vibrate in order to detach the dust which has deposited on the filter.

6. Cleaning process according to claim 5, **characterized in that** the gas bypassed around the electrostatic filter whilst said filter is cleaned is directed directly to a second filter (24) downstream of the electrostatic filter.

7. Cleaning process according to either of the claims 5 and 6, **characterized in that** cleaning takes place as soon as a voltage, maintained between conductor elements (3) of the filter (1) by a voltage generator (19), passes below a given threshold.

8. Cleaning process according to any one of the claims 5 to 7, **characterized in that** it takes place without breaking the filter confinement.
